# DEMANDE DE BREVET EUROPEEN

(11) **EP 0 816 160 A1**
(43) Date de publication de la demande: **07.01.1998**
(21) Numéro de dépôt: 97401428.4
(22) Date de dépôt: 20.06.1997
(51) Int. Cl.: B60N 2/28

(54) **Siège pour enfant à dossier inclinable**

(30) Priorité: 28.06.1996 FR 9608132
(71) Demandeur: AMPAFRANCE S.A., 49309 Cholet (FR)
(72) Inventeur: Surot, Patrick, 49300 Cholet (FR)
(74) Mandataire: Casalonga, Axel

(57) **Abrégé**

Siège pour enfant du type comprenant un baquet 2 muni d'une d'assise 5 et d'une partie de dossier 6 et une armature 3 soutenant le baquet 2 et destinée à être posée et fixée sur un siège 4 de véhicule automobile. L'inclinaison du baquet 2 peut être modifiée par rotation d'une vis 15 coopérant avec un écrou 18 monté basculant sur l'armature 3, la partie de dossier 6 étant maintenue par deux glissières 23 coopérant avec un montant transversal 25 de l'armature 3. Dans un mode de réalisation, la partie d'assise 5 comporte une portion coulissante 33 dont le déplacement d'avant en arrière est provoqué par la rotation de la vis 15 au moyen d'une vis auxiliaire 26 de façon que la dimension de l'assise soit augmentée lorsque le baquet 2 est plus incliné. Dans une variante le siège comporte en outre des éléments de châssis latéraux 40 définissant des accoudoirs qui peuvent être simultanément rapprochés ou écartés.

## Description

La présente invention a pour objet un siège pour enfant comprenant un baquet muni d'une partie d'assise et d'une partie de dossier et une embase soutenant le baquet destiné à être posée et fixée sur un siège de véhicule automobile.

On sait que les sièges pour enfant destinés à l'automobile sont conçus pour garantir un maximum de protection en cas d'accident et ce, dans les meilleures conditions de confort possibles. La présente invention a pour objet un tel siège pour enfant qui présente des moyens permettant de manière simple d'incliner l'ensemble du baquet dans lequel est logé l'enfant de façon à pouvoir le mettre en position de repos la plus allongée possible. Le baquet peut alors occuper une première position dans laquelle la partie de dossier est sensiblement verticale et peut être déplacé jusqu'à une deuxième position dans laquelle la partie de dossier est inclinée.

L'invention a également pour objet un tel siège permettant une inclinaison progressive du baquet et le maintien du baquet dans toute position intermédiaire.

L'invention a également pour objet, dans une variante, de prévoir en même temps que l'inclinaison du baquet, des moyens permettant d'allonger l'assise du siège ainsi qu'éventuellement d'augmenter l'angle entre l'assise et le dossier de façon à améliorer encore le confort de l'enfant en position allongée.

Enfin dans une troisième variante l'invention a encore pour objet de permettre également une modification de la largeur du baquet indépendamment ou en fonction de l'inclinaison de ce dernier.

Selon l'invention, le siège pour enfant comprend un baquet muni d'une partie d'assise et d'une partie de dossier et une embase soutenant le baquet et destinée à être posée et fixée sur un siège de véhicule automobile. L'inclinaison du baquet peut être modifiée à l'aide d'un moyen de commande, capable de monter ou abaisser l'avant de la partie d'assise par rapport à l'armature et d'un moyen de maintien autorisant le coulissement de la partie de dossier par rapport à l'armature.

Le moyen de commande comprend de préférence un dispositif à vis et écrou monté entre la face inférieure de l'assise et l'embase et un organe de commande monté sur l'avant de la partie d'assise de façon à pouvoir placer et maintenir le baquet dans toute position intermédiaire.

Le dispositif à vis et écrou peut comprendre par exemple une vis principale, de préférence à pas rapide, montée en vue de sa rotation entre un palier solidaire de la face inférieure de l'assise et un palier solidaire d'une portion inclinée de l'avant de la partie d'assise et un écrou principal monté basculant sur l'embase.

Le moyen de maintien comprend de préférence deux glissières solidaires de la partie de dossier et coopérant avec un montant transversal de l'embase.

Dans une variante avantageuse du siège pour enfant selon l'invention , la partie d'assise comporte une portion coulissante dont le déplacement d'avant en arrière est provoqué par le moyen de commande de façon que la dimension de l'assise soit augmentée lorsque le baquet est plus incliné. De cette manière, le confort de l'enfant est accru en position allongée, inclinée.

A cet effet, un dispositif auxiliaire à vis et écrou est avantageusement monté sous l'assise de façon à entraîner la portion coulissante de la partie d'assise.

Un tel dispositif auxiliaire à vis et écrou peut comprendre par exemple une vis auxiliaire montée en vue de sa rotation entre un palier solidaire de la face inférieure de l'assise et un palier solidaire de la portion inclinée de l'avant de la partie d'assise, la vis auxiliaire étant parallèle à la vis principale et entraînée en rotation par cette dernière. Un écrou est monté sur la portion coulissante de la partie d'assise et coopère avec la vis auxiliaire.

Selon un mode de réalisation, un pignon denté est monté à l'extrémité de la vis principale de façon à engrèner avec une roue dentée montée à l'extrémité de la vis auxiliaire. Le pignon et la roue dentée peuvent être montés à proximité des paliers solidaires de la face inférieure de l'assise.

La vis auxiliaire est généralement montée au-dessus de la vis principale, entre cette dernière et la partie d'assise.

Dans un mode de réalisation préféré, une portion d'appui lombaire est articulée sur la portion coulissante de la partie d'assise de façon à augmenter l'angle entre l'assise et le dossier lors du déplacement vers l'avant de la portion coulissante de l'assise. On obtient ainsi une amélioration du confort dans la position la plus allongée du siège pour enfant.

Selon une autre variante avantageuse de l'invention, le siège comprend en outre deux éléments de châssis latéraux montés respectivement d'un côté et de l'autre du baquet, sur des axes supérieur et inférieur solidaires du baquet et situés dans un plan vertical. Les deux éléments de châssis latéraux définissent deux armatures d'accoudoir pivotant entre une position mutuellement rapprochée et une position écartée. Le pivotement des deux éléments de châssis latéraux est de préférence commandé simultanément au moyen d'un organe auxiliaire de commande unique monté sur l'avant de la partie d'assise.

Cet organe auxiliaire de commande est avantageusement monté coaxialement à la vis principale précitée et agit par exemple sur un plateau rotatif relié à deux tringles de commande elles-mêmes reliées aux deux éléments de châssis latéraux.

L'invention sera mieux comprise à l'étude d'un mode de réalisation particulier décrit à titre d'exemple nullement limitatif et illustré par les figures annexées sur lesquelles :
la figure 1 est une vue en élévation de côté d'un siège pour enfant conforme à la présente invention dans la position la moins inclinée;
la figure 2 est une vue de détail de la figure 1 en coupe d'une partie du mécanisme de commande d'inclinaison;
la figure 3 est une vue similaire à la figure 1 montrant le même siège dans la position la plus inclinée;
la figure 4 est une vue de devant du siège des figures précédentes montrant les accoudoirs latéraux dans la position la plus rapprochée;
la figure 5 est une vue similaire à la figure 4 montrant les accoudoirs latéraux dans leur position la plus éloignée;
la figure 6 est une vue de dessous montrant en particulier le mécanisme de commande des accoudoirs latéraux; et
la figure 7 est une vue de détail en coupe du mécanisme de commande des accoudoirs.

Tel qu'il est illustré sur les figures, le siège pour enfant référencé 1 dans son ensemble, comprend une partie moulée en matière plastique formant un baquet 2, et une embase réalisée ici sous la forme d'une armature métallique tubulaire 3 soutenant le baquet 2 et constituant un support destiné à être posé et fixé sur le siège 4 du véhicule, illustré schématiquement. L'assujettissement du siège pour enfant 1 au siège du véhicule 4, se fait de manière classique et non illustrée sur les dessins, au moyen de sangles ou de préférence directement par le biais de la ceinture de sécurité du véhicule automobile qui coopère avec l'armature 3 en vue de cette fixation.

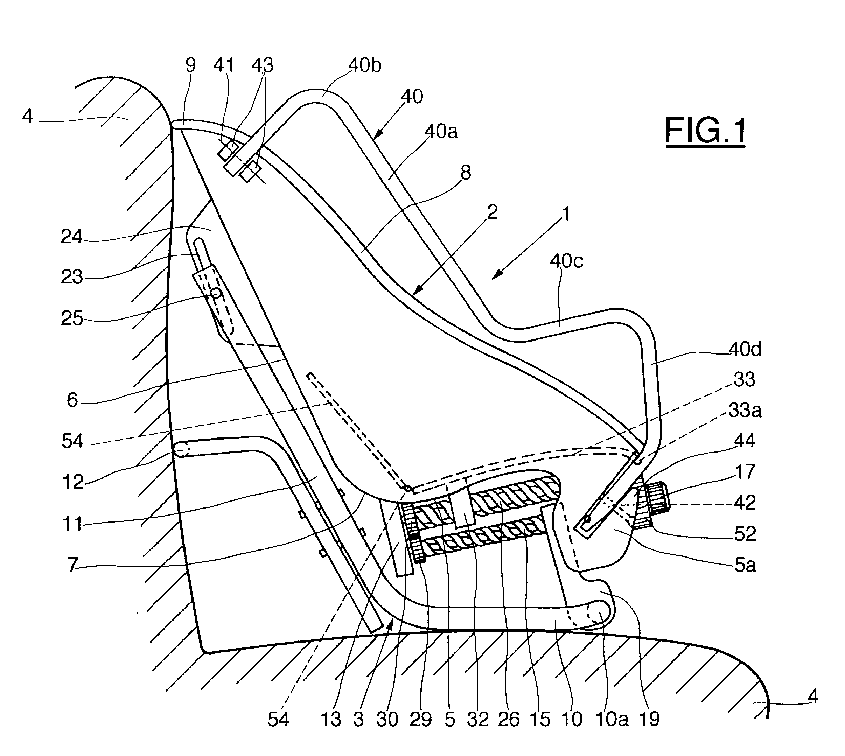

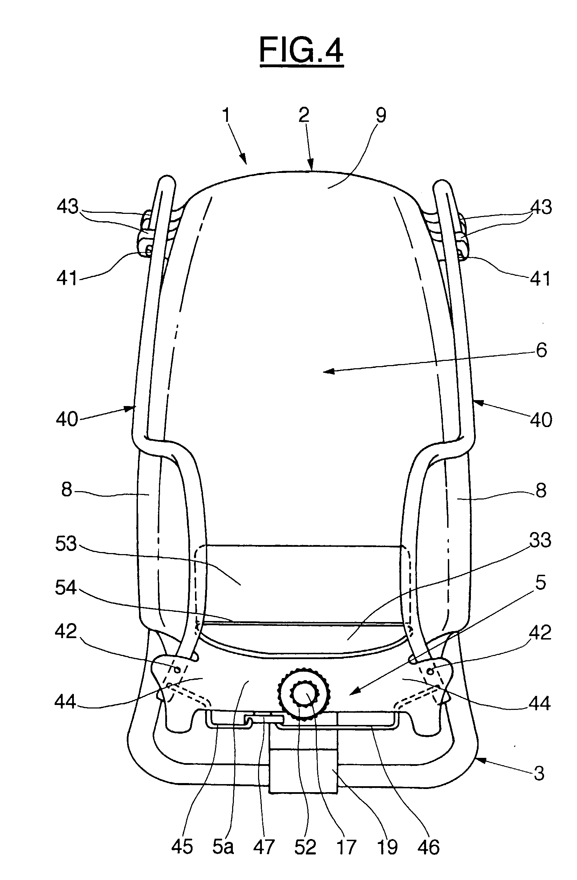

Le baquet 2 comprend une partie d'assise 5 (figure 4) qui est sensiblement horizontale dans la position la moins inclinée illustrée sur la figure 1. Le baquet 2 comprend, également une partie de dossier 6 visible sur la figure 4 laquelle se trouve, dans la position la moins inclinée illustrée sur la figure 1, sensiblement verticale avec cependant une légère inclinaison vers l'arrière pour améliorer le confort de l'enfant. La partie d'assise 5 et la partie de dossier 6 se rejoignent entre elles par une portion inférieure incurvée 7. Le baquet 2 est complété par des portions latérales 8 qui s'étendent depuis la partie supérieure 9 du baquet 2 qui joue le rôle d'un appui-tête, jusqu'à sa partie inférieure où elle rejoint la partie avant 5a de l'assise qui joue le rôle d'un soutien pour les jambes ou les pieds de l'enfant. L'ensemble ainsi constitué présente, comme on peut le voir sur les figures, une forme générale de baquet assurant ainsi le confort de l'enfant. Bien entendu le baquet en matière plastique moulé est habillé d'un rembourrage approprié qui n'est pas illustré sur les figures.

L'armature tubulaire 3 comprend un cadre inférieur 10 disposé sous la portion d'assise 5 et destiné à être posé sur le siège 4 du véhicule automobile. Le cadre inférieur 10 se prolonge vers le haut sous la forme d'un cadre arrière 11 qui reçoit en outre une barre d'écartement transversale 12 conçue sous la forme d'un U et solidaire du cadre arrière 11. L'ensemble de l'armature tubulaire 3 ainsi constitué peut être posé sur le siège 4 du véhicule, la barre d'écartement 12 venant prendre appui sur le dossier du siège 4. Le siège pour enfant 1 se trouve alors convenablement installé sur le siège 4 du véhicule, le baquet 2 étant supporté par l'armature rigide 3.

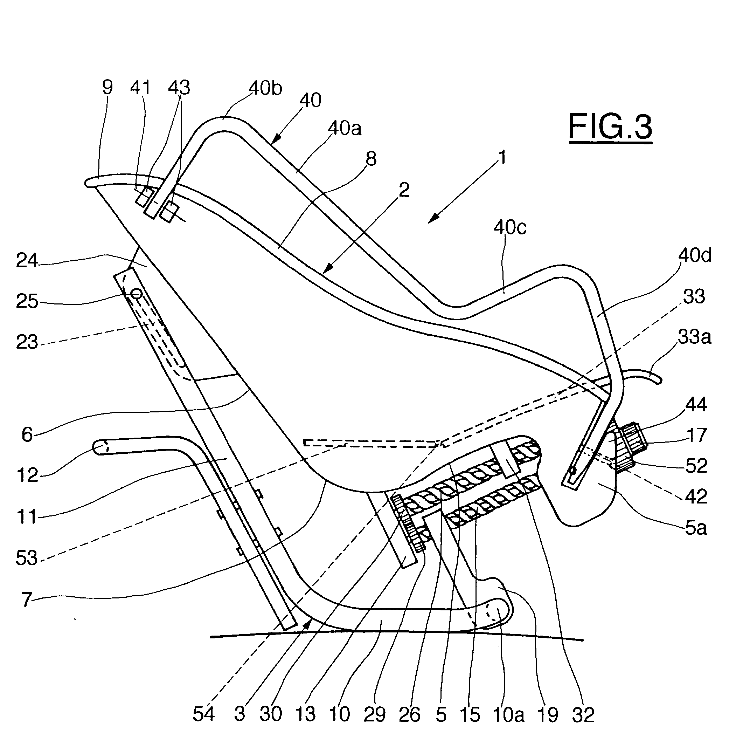

Conformément à la présente invention, le baquet 2 peut être incliné entre une position illustrée sur la figure 1 qui est la moins inclinée et une position plus inclinée illustrée sur la figure 3 toutes les positions intermédiaires étant également possibles. A cet effet, la face inférieure de l'assise 5 présente une pièce support 13 s'étendant vers le bas rendue solidaire du baquet 2 et comportant un palier 14 capable de recevoir une vis principale 15 à pas rapide. L'autre extrémité de la vis 15 traverse un passage 16 pratiqué dans la partie avant 5a de l'assise et comporte une molette 17 qui peut être entraînée manuellement en rotation. On comprend donc dans ce montage que le passage 16 joue en quelque sorte pour la vis principale 15 le rôle d'un palier.

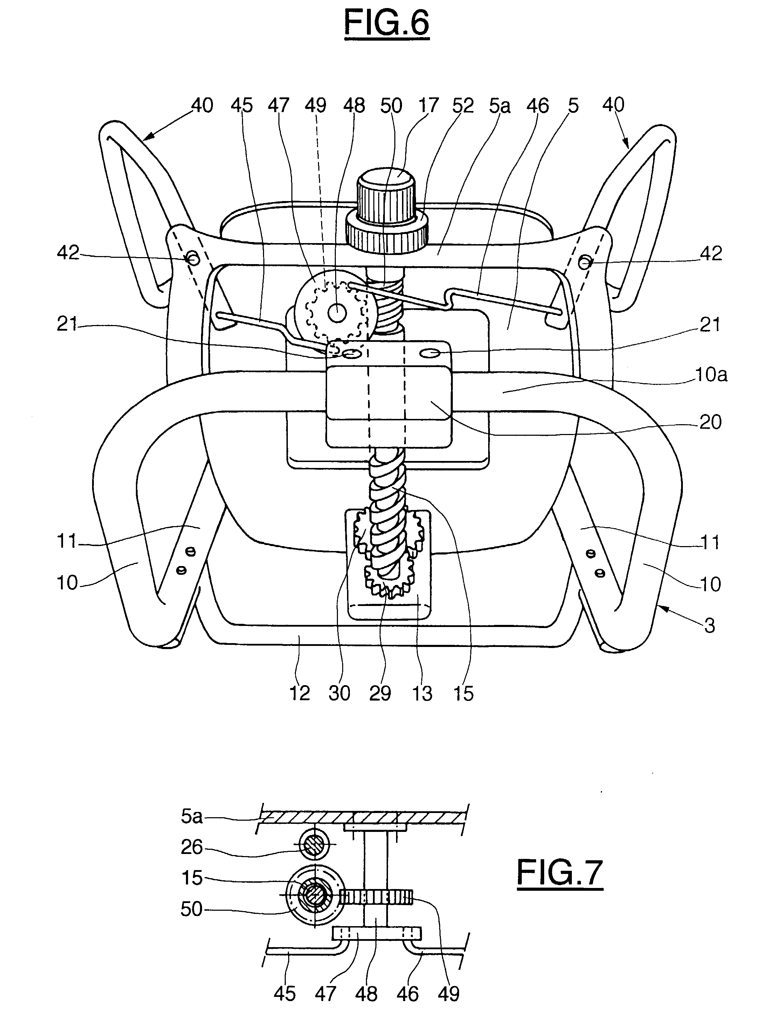

La vis 15 est de préférence réalisée en matière plastique. Elle coopère avec une portion à filetage interne jouant le rôle d'écrou principal 18 faisant partie d'une patte 19 montée sur le montant transversal avant 10a du cadre inférieur 10 de l'armature 3 de façon à pouvoir basculer sur un angle de faible amplitude par rapport au montant 10a. A cet effet, comme on le voit notamment sur la figure 6, un manchon 20 vient enserrer le montant 10a entre deux butées 21, le manchon 20 étant légèrement serré sur le montant 10a de façon à autoriser comme il vient d'être dit un basculement de faible amplitude de la patte 19 rendue solidaire du manchon 20 par les vis 21.

La partie de dossier 6 du baquet 2 présente dans sa portion supérieure et de chaque côté, une fente 23 qui, dans l'exemple illustré, est pratiquée sur une patte en saillie vers l'arrière référencée 24 venue de moulage avec le baquet 2. Un montant transversal 25 de l'armature 3 peut passer à travers les deux fentes 23 qui constituent ainsi des glissières lors du mouvement d'inclinaison du baquet 2.

Pour procéder à la modification d'inclinaison du baquet 2 par exemple à partir de la position illustrée sur la figure 1, il suffit d'agir sur la molette 17 en tournant celle-ci, par exemple dans le sens inverse des aiguilles d'une montre. La rotation de la vis à pas rapide 15 provoque le déplacement de ladite vis par rapport à l'écrou 18 de la patte 19. Ce mouvement entraîne le soulèvement de l'avant de la partie d'assise 5 par rapport au cadre inférieur 10 de l'armature qui reste immobile sur le siège 4 du véhicule. On comprend que dans ce mouvement, la patte 19 bascule légèrement par rapport au montant inférieur transversal 10a grâce au manchon 20 comme il a été indiqué précédemment.

Simultanément, la portion supérieure de la partie de dossier 6 coulisse par rapport au cadre arrière 11 de l'armature 3, les glissières 23 descendant par rapport au montant transversal 25 qui constitue un moyen de maintien de la portion supérieure de la partie de dossier 6, autorisant cependant le coulissement de cette dernière par rapport à l'armature 3.

Toutes les positions d'inclinaison à partir de celle représentée sur la figure 1 et jusqu'à celle illustrée sur la figure 3 peuvent être adoptées et maintenues grâce au frottement du dispositif à vis 15 et écrou 18.

Grâce à la structure des moyens utilisés dans cette exemple conforme à l'invention, il est donc possible d'obtenir aisément une inclinaison quelconque du baquet 2 du siège pour enfant 1 qui reste par ailleurs convenablement posé et fixé sur le siège 4 du véhicule au moyen de l'armature rigide 3.

Dans le mode de réalisation illustré sur les figures, on a également prévu une disposition facultative supplémentaire permettant d'augmenter la dimension de l'assise et l'angle entre l'assise et le dossier du siège en fonction de son inclinaison.

A cet effet, le siège 1 illustré sur les figures comprend une vis auxiliaire 26 montée au-dessus de la vis principale 15 parallèlement à cette dernière entre elle et la partie d'assise 5. La vis auxiliaire 26 est supportée à l'une de ses extrémités par un palier 27 qui fait partie de la pièce support 13. A son autre extrémité, la vis auxiliaire 26 est supportée par un palier 28 solidaire de la partie avant 5a de l'assise 5. La vis auxiliaire 26 est entraînée en rotation par un train d'engrenage qui comprend un pignon 29 solidaire de la vis principale 15 et une roue dentée 30 solidaire de la vis auxiliaire 26, l'ensemble étant monté à proximité de la pièce support 13.

La vis auxiliaire 26 coopère avec un écrou 31 pratiqué sur une patte d'entraînement 32 fixée sous une plaque coulissante 33 placée au-dessus de l'assise 5. L'assise 5 présente dans sa partie centrale une échancrure 5b à travers laquelle peut passer la patte d'entraînement 32.

De plus, dans l'exemple illustré et bien que cela ne soit qu'un perfectionnement non indispensable, une portion d'appui lombaire constituée par une plaque 53 est reliée à la plaque coulissante 33 par une articulation à charnière 54. La plaque 53 prend appui par son bord opposé à la charnière 54 sur le dossier 6 du siège 1. De cette manière, la plaque 53 qui occupe la zone 7 du siège 1 située à la jonction entre le dossier 6 et l'assise 5, se trouve plus ou moins inclinée selon le déplacement de la plaque coulissante 33, modifiant ainsi l'angle formé entre ladite plaque 53 qui définit la zone inférieure du dossier 6 et l'assise proprement dite du siège formée par la plaque coulissante 33.

Bien entendu les différentes plaques 33, 53 sont en réalité logées dans un rembourrage approprié non illustré sur les figures.

Le coulissement d'avant en arrière de la portion coulissante 33 entraînant l'inclinaison de la plaque 53 est obtenu de la manière suivante.

Lorsqu'on agit sur la molette 17 pour entraîner en rotation la vis principale 15 et provoquer comme on l'a vu précédemment une modification de l'inclinaison du baquet 2 pour passer par exemple de la position illustrée sur la figure 1 à une position plus inclinée telle qu'illustrée sur la figure 3, la rotation ainsi imprimée à la vis principale 15 provoque, par l'intermédiaire du pignon 29 et de la roue dentée 30, une rotation dans l'autre sens de la vis auxiliaire 26. Il en résulte un déplacement de l'écrou 31 le long de la vis auxiliaire 26 et donc également un déplacement de la patte d'entraînement 32 et de la portion coulissante 33. La portion coulissante 33 se déplace parallèlement à l'assise 5 de façon que son extrémité incurvée 33a s'écarte de la partie avant 5a de l'assise, augmentant ainsi les dimensions hors tout de l'assise du baquet 2. En même temps, le bord opposé de la portion coulissante 33 comportant la charnière 54 se déplace et provoque une augmentation d'inclinaison de la plaque 53, en appui sur la paroi interne du dossier 6, la plaque 53 se rapprochant de l'horizontale. On notera que pour obtenir ce résultat il suffit, dans l'exemple illustré, que le pas de la vis principale 15 et celui de la vis auxiliaire 26 soient dans le même sens. Une démultiplication appropriée peut être adoptée en choisissant les diamètres respectifs du pignon 29 et de la roue dentée 30 de façon que dans la position la moins inclinée illustrée sur la figure 1 la portion coulissante 33 soit pratiquement confondue avec la partie d'assise 5 avec la plaque 53 sensiblement confondue avec le dossier 6, tandis que dans la position la plus inclinée illustrée sur la figure 3 la portion coulissante 33 fasse au contraire saillie au maximum de façon à définir la dimension maximale de l'assise avec la plaque 53 proche de l'horizontale.

On obtient ainsi automatiquement, pour chaque inclinaison du baquet 2 une dimension correspondante de l'assise et un angle optimal entre le dossier et l'assise, assurant pour chaque position un confort maximal pour l'enfant.

Dans l'exemple illustré sur les figures, le siège pour enfant 1 présente en outre des accoudoirs à écartement variable permettant ainsi de modifier à volonté la largeur utile du baquet 2.

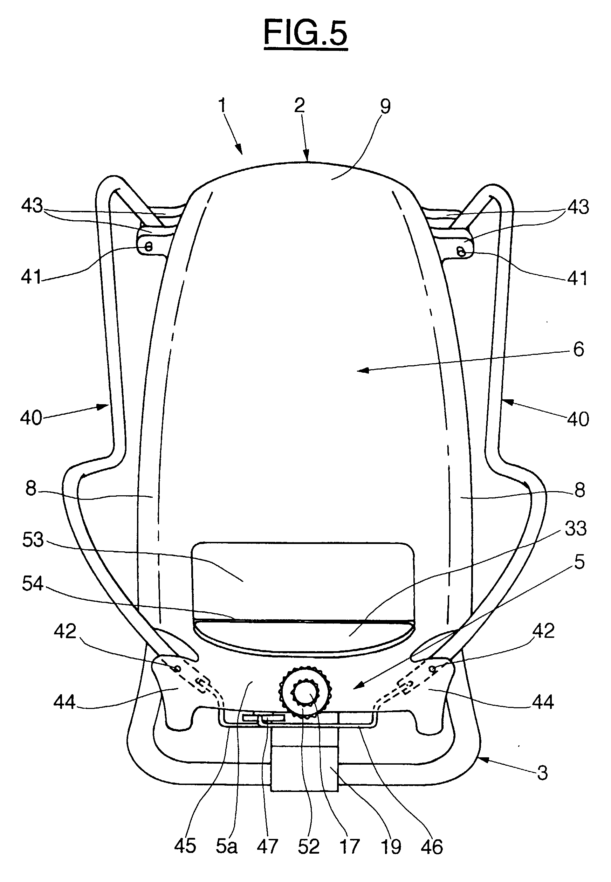

A cet effet comme illustré sur les figures, le siège pour enfant 1 comporte de chaque côté du baquet 2 un élément de châssis latéral 40. Chaque élément 40 est constitué, dans l'exemple illustré, par un tube métallique dont l'extrémité supérieure est montée à rotation sur un axe supérieur 41 et dont l'extrémité inférieure est montée à rotation sur un axe inférieur 42 (figures 4 et 6). Les axes inférieurs 42 et supérieurs 41 sont fixés sur le baquet 2 en matière plastique moulée et sont en outre disposés dans un plan vertical comme on le voit par exemple sur les figures 4 et 5. On notera que, dans l'exemple illustré, les axes supérieurs 41 sont montés sur des pattes de fixation 43 venues de moulage avec le baquet 2. Il en est de même des axes inférieurs 42 montés sur des pattes de fixation 44 venues de moulage avec le baquet 2 au voisinage de la partie avant 5a de l'assise 5.

Dans l'exemple illustré, chaque élément de châssis latéral 40 présente une portion supérieure 40a munie d'un coude 40b qui permet d'assurer une bonne protection de la tête de l'enfant. Chaque élément de châssis latéral 40 comporte en outre une portion inférieure 40c proche de l'horizontale qui se poursuit par un coude sensiblement vertical 40d, l'ensemble jouant le rôle d'un accoudoir.

On comprendra bien entendu que dans la réalité un rembourrage approprié vient habiller chacun des éléments de châssis latéraux 40 formant ainsi de chaque côté du baquet 2 des montants latéraux améliorant la protection et le confort de l'enfant.

Selon l'invention, les deux éléments de châssis latéraux 40 peuvent être plus ou moins écartés l'un de l'autre. Leur pivotement se fait simultanément au moyen de deux tringles de commande 45 et 46 reliées à l'une de leurs extrémités aux extrémités inférieures respectives des éléments de châssis latéraux 40 et à leur autre extrémité à un plateau rotatif 47. La fixation des tringles de commande 45 et 46 se fait sur le plateau rotatif 47 en des points sensiblement diamètralement opposés comme on peut le voir sur la figure 6.

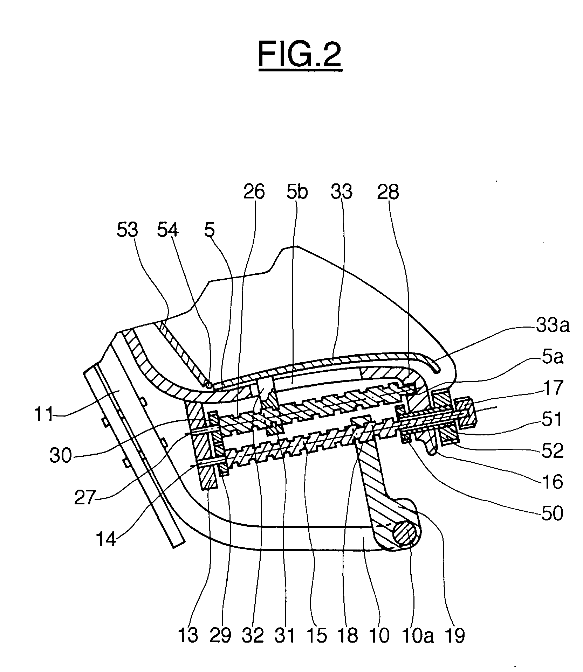

Le plateau 47 est monté sur un axe 48 sensiblement vertical solidaire de l'avant 5a de la partie d'assise 5 (figure 7). La rotation du plateau 47 est provoquée par un pignon 49 également monté sur l'axe 48 et engrènant avec une portion filetée de vis 50 solidaire d'un axe creux 51 coaxial à la vis principale 15 comme on peut le voir sur la figure 2. L'axe creux 51 traverse le passage 16 pratiqué dans la partie avant 5a de l'assise 5. Une molette d'entaînement 52 est disposée à l'extérieur de la partie avant 5a de l'assise 5 et permet à l'utilisateur d'entraîner manuellement en rotation la vis 50 et par voie de conséquence le plateau rotatif 47, provoquant ainsi l'écartement ou le rapprochement des deux éléments de châssis latéraux. On notera en observant la figure 6 que le plateau rotatif 47, du fait des moyens d'entraînement en rotation qui viennent d'être décrits et en particulier de la disposition axiale de la vis 50 et de la molette d'entraînement 52, se trouve désaxé par rapport au plan de symétrie vertical du siège 1 dans son ensemble. Il en résulte que la tringle de commande 45 est plus courte que la tringle de commande 46 comme on peut le voir sur la figure 6.

Dans le mode de réalisation illustré, la vis 50 est indépendante de la vis principale 15 de sorte que l'actionnement synchronisé et simultané des éléments de châssis latéraux 40 est indépendant de l'actionnement de l'inclinaison du baquet. On comprendra néanmoins que grâce à la disposition des différents éléments d'entraînement, il serait aisé de prévoir au contraire que le mouvement des éléments de châssis latéraux 40 se fait en même temps que la variation d'inclinaison du baquet 2 et par la même commande. Il suffirait alors de rendre solidaire les deux molettes 17 et 52. A la position la plus inclinée illustrée sur la figure 2 pourrait correspondre la position la plus rapprochée des éléments de châssis latéraux 40 de façon à assurer un meilleur maintien de l'enfant en position proche de la position couchée. On pourrait également imaginer au contraire de prévoir un écartement maximal des éléments de châssis latéraux 40 pour la position la plus inclinée illustrée sur la figure 2.

Bien que dans l'exemple illustré l'embase soit réalisée sous la forme d'une armature métallique, on comprendra qu'une embase en matière plastique moulée pourrait également être utilisée. L'embase moulée présente alors des moyens appropriés pour le montage pivotant de la patte 19 portant l'écrou 18 et la retenue du siège par les glissières 23.

## Revendications

1. Siège pour enfant comprenant un baquet (2) muni d' une partie d'assise (5) et d'une partie de dossier (6) et une embase (3) soutenant le baquet (2) et destinée à être posée et fixée sur un siège (4) de véhicule automobile, l'inclinaison du baquet (2) pouvant être modifiée à l'aide d'un moyen de commande comprenant un dispositif à vis et écrou monté entre la face inférieure de l'assise et l'embase, et d'un moyen de maintien (23,25) autorisant le coulissement de la partie de dossier (6) par rapport à l'embase (3), caractérisé par le fait que le dispositif à vis et écrou comprend: une vis principale (15), de préférence à pas rapide, entrainée par un organe de commande (17) monté sur l'avant de la partie d'assise, la dite vis étant montée en vue de sa rotation entre un palier (14) solidaire de la face inférieure de l'assise et un palier (16) solidaire d'une portion inclinée de l'avant (5a) de la partie d'assise; et un écrou principal (18,19) monté basculant sur l'embase (3); l'ensemble étant capable de monter ou abaisser l'avant de la partie d'assise (5) par rapport à l'embase (3) .

2. Siège pour enfant selon la rcvendication 1 caractérisé par le fait que le moyen de maintien comprend deux glissières (23) solidaires de la partie de dossier (6) et coopérant avec un montant transversal de l'embase (3).

3. Siège pour enfant selon l'une des revendications précédentes caractérisé par le fait que la partie d'assise (5) comporte une portion coulissante(33) dont le déplacement d'avant en arrière est provoqué par le moyen de commande (15,17,19) de façon que la dimension de l'assise soit augmentée lorsque le baquet (2) est plus incliné.

4. Siège pour enfant selon la revendication 3 caractérisé par le fait qu'un dispositif auxiliaire à vis et écrou est monté sous l'assise de façon à entrainer la portion coulissante (33) de la partie d'assise.

5. Siège pour enfant selon les revendications 3 et 4 caractérisé par le fait que le dispositif auxiliaire à vis et écrou comprend:
- une vis auxiliaire (26) montée en vue de sa rotation entre un palier (27) solidaire de la face inférieure de l'assise et un palier (28) solidaire de la portion inclinée de l'avant (5a) de la partie d'assise, la vis auxiliaire (26) étant parallèle à la vis principale (15) et entrainée en rotation contraire par cette dernière;
- et un écrou (31) solidaire de la portion coulissante de la partie d'assise.

6. Siège pour enfant selon la revendication 5 caractérisé par le fait qu'un pignon denté (29) est monté à l'extrémité de la vis principale (15) de façon à engrèner avec une roue dentée (30) montée à l'extrémité de la vis auxiliaire (26).

7. Siège pour enfant selon la revendication 6 caractérisé par le fait que le pignon (29) et la roue dentée (30) sont montés à proximité des paliers (14,27) solidaires de la face inférieure de l'assise (5).

8. Siège pour enfant selon l'une quelconque des revendications 4 à 7 caractérisé par le fait que la vis auxiliaire (26) est montée au dessus de la vis principale (15), entre cette dernière et la partie d'assise (15).

9. Siège pour enfant selon l'une quelconque des revendications 3 à 8, caractérisé par le fait qu'une portion d'appui lombaire (53) est articulée sur la portion coulissante (33) de façon à augmenter l'angle entre l'assise et le dossicr lors du déplacement vers l'avant de ladite portion coulissante (33).

10. Siège pour enfant selon l'une quelconque des revendications précédentes caractérisé par le fait que deux éléments de chassis latéraux (40) sont montés respectivement d'un côté et de l'autre du baquet (2), sur des axes supérieur (41) et inférieur (42) solidaires du baquet (2) et situés dans un plan vertical, de façon à définir deux armatures d'accoudoir pivotant entre une position mutuellement rapprochée et une position écartée, le pivotement des deux éléments de chassis latéraux étant commandé simultanément au moyen d'un organe auxiliaire de commande unique (52) monté sur l'avant (5a) de la partie d'assise.

11. Siège pour enfant selon la revendication 10 caractérisé par le fait que 1' organe auxiliaire de commande (52) est monté coaxialement à la vis principale (15) précitée et agit sur un plateau rotatif (47) relié à deux tringles de commande (45,46) elles mêmes reliées aux deux éléments de chassis latéraux (40).

12. Siège pour enfant selon l'une quelconque des revendications précédentes, caractérisé par le fait que l'embase (3) est réalisée sous la forme d'une armature métallique tubulaire.

13. Siège pour enfant selon l'une quelconque des revendications 1 à 11, caractérisé par le fait que l'embase (3) est réalisée en matière plastique moulée.
